(19) Europäisches Patentamt

European Patent Office

Office européen des brevets

(11) **EP 1 176 778 A1**

(12) **EUROPÄISCHE PATENTANMELDUNG**

(43) Veröffentlichungstag:
   **30.01.2002   Patentblatt 2002/05**

(51) Int Cl.⁷: **H04L 29/06**

(21) Anmeldenummer: **00116465.6**

(22) Anmeldetag: **29.07.2000**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(71) Anmelder: **Micronas GmbH**
   **79108 Freiburg (DE)**

(72) Erfinder: **Temerinac, Miodrag, Prof. Dr.-Ing.**
   **79194 Gundelfingen (DE)**

(74) Vertreter: **Sauer, Wolfgang, Dipl.-Ing.**
   **MICRONAS GmbH, Patentabteilung,**
   **Hans-Bunte-Strasse 19**
   **79108 Freiburg i.Br. (DE)**

(54) **Datenübertragungsverfahren**

(57)    Datenübertragungsverfahren für ein paketförmiges Datenformat mit einem Steuerteil (4) und einem nachfolgenden Datenteil (5). Bei der Übertragung des paketförmigen Datenformats wird zwischen dem Steuerteil und Datenteil die Datenrate, gegebenenfalls mittels eines im Steuerteil mitübertragenen Steuerbefehls, umgeschaltet. Durch die Umschaltung wird die Datenrate des Datenteils gegenüber der Datenrate des Steuerteils deutlich erhöht.

## Fig. 2

EP 1 176 778 A1

**Beschreibung**

Die Erfindung betrifft ein Datenübertragungsverfahren, bei dem Daten beliebigen Ursprungs in einem paketförmigen Format übertragen werden. Vorzugsweise handelt es sich dabei um standardisierte Paketformate mit breiten Anwendungsmöglichkeiten. Grundsätzlich enthalten alle derartigen Paketformate zu Beginn einen Synchronisationsteil, um Sender und Empfänger taktmäßig zu synchronisieren. Dann folgt ein Adressenteil zur Identifizierung des Empfängers und gegebenenfalls auch des Senders. Daran schließt sich ein mehr oder weniger langer Steuerteil mit Steuerdaten an, die Steuer- und Kontrollbefehle im Empfänger betreffen und auch Informationen über die übertragenen Daten enthalten. Diese Formatbereiche zu Beginn des Pakets oder nach dem Synchronisationsteil werden werden oft mit der angelsächsischen Bezeichnung "Header" zusammengefaßt. An den Header schließt sich dann der eigentliche Datenteil des Paktets an, der die zu übertragenden Daten enthält und im Vergleich zum Header und/oder Synchronisationsteil relativ lang ist. Ob eine Endinformation das Ende des Datenpakets anzeigt, ist nur dann erforderlich, wenn die Länge des Formats nicht fest vorgegeben ist und auch nicht aus einer Information des Steuerteils für den Empfänger erkennbar ist.

Der Austausch von Daten findet zunehmende Bedeutung, weil Audio- und Video- und sonstige Informationen, beispielsweise Bücher, Zeitschriften, Karten, Photos, gescannte Unterlagen usw. immer mehr in digitaler Form als Daten vorliegen. Dabei entsteht zunehmend ein Bedarf, die zugehörigen Daten anstatt der eigentlichen Information mitzunehmen, zu speichern oder mit anderen Personen auszutauschen und dafür einfache Speichereinrichtungen und drahtlose Übertragungsverfahren ohne die lästigen Kabelverbindungen zu verwenden. Für die Wiedergabe können dann die eigenen Wiedergabeeinrichtungen verwendet werden, nach sie ebenfalls drahtlos mit diesen Daten geladen worden sind.

Ein Beispiel für ein derartiges Datenübertragungsverfahren mit einem paketförmigen Datenformat stellt der weltweite "Bluetooth"-Übertragungsstandard dar, mit dem per Funk über kurze Distanzen Daten übertragbar sind. Er soll Kabelverbindungen zu beweglichen Kommunikationseinrichtungen wie Handys, Laptops usw. überflüssig machen, genau so wie lästige Kabelverbindungen im technischen oder medizinischen Bereich. Beispielsweise kann eine derartige Übertragungsstrecke auch die Kabelverbindung zwischen einem Computer und der zugehörigen Maus ersetzen. Für den Bluetooth-Übertragungsstandard wird der weltweit lizenzfreie Frequenzbereich zwischen 2,4 GHz und 2,48 GHz verwendet, der für industrielle, wissenschaftliche und medizinische Zwecke zur freien Verfügung steht. Damit eine gegenseitige Störung weitgehen ausgeschlossen ist, wird nach dem Bluetooth-Übertragungsstandard die maximal zulässige Sendeleistung drastisch begrenzt, weil die Funkübertragung nur für einen relativ engen Nahbereich vorgesehen ist. Um bei der Übertragung Störungen von den oft starken industriellen oder medizinischen Störquellen möglichst klein zu halten, wird das Spreiz-Spektrum Verfahren (=Spread Spectrum) verwendet, das relativ unempfindlich gegenüber störende Frequenzspitzen im überdeckten Frequenzspektrum ist. Nähere Einzelheiten des Bluetooth-Übertragungsstandards sind beispielsweise in "Funkschau", Nr. 9, 2000, 14. April 2000, Seiten 54 bis 57 in dem Übersichtsartikel von Prof. Dr. Harald Melcher "Die Bluetooth-Übertragung" beschrieben. Ausführliche Detailinformationen zum Bluetooth-Standard, finden sich beispielsweise auch in der über die Internetadresse "http://bluetooth.com" abfragbaren Spezifikation: "The Bluetooth Specification ", Version 1.0B vom 29. Nov. 1999. Im Teil B "Baseband Specification", Kapitel 4 "Packets", Seiten 47 bis 66 finden sich die Ausführungen zum paketförmigen Datenformat.

In "Funkschau", Nr. 13, vom 9. Juni 2000, wird auf den Seiten 43 bis 45 unter dem Titel "Multimediafähiger Datenfunk" ein anderes drahtloses Datenübertragungsverfahren vorgestellt, das über eine DECT-Funkverbindung Geräte wie PC (=Personal Computer), Drucker, Videokameras oder Fernsehempfänger drahtlos miteinander verbinden soll. Die angestrebte Reichweite der Funkverbindung ist etwa 50 Meter innerhalb von Gebäuden und etwa 300 Meter außerhalb.

Nachteil bei diesen und ähnlichen paketförmigen Übertragungsstandards, insbesondere für Anwendungen im Unterhaltungs- und Konsumbereich, ist die relativ geringe Datenübertragungsrate, die beispielsweise bei Bluetooth durch die geringe Kanalbreite von 1 MHz bedingt ist. Bei der Übertragung großer Datenmengen, die bei der Übertragung von Audio- und insbesondereVideodaten auftreten, dauert die Übertragung zu lange. Beispielsweise sind für die Übertragung von 3 Minuten MP3-komprimierter Musik, die etwa einer Bitmenge von ca. 2,8 MByte entspricht, bei einer kanalbedingten Datenrate von 128 kBit/s etwa 33 Sekunden erforderlich. Das ist viel zu lang, insbesondere im Hinblick auf mögliche Störungen während dieser Zeit, die dann eine oder mehrere Wiederholungen erfordern würden. Wünschenswert ist die Reduktion dieser Zeit mindestens um den Faktor 10. Die Vorteile der bereits vorhandenen Systeme, wie beispielsweise die Übernahme bewährter Funktionseinheiten und die Verwendung lizenzfreier Frequenzbereiche, sollen natürlich soweit wie möglich beibehalten werden. Um dabei nicht in grundsätzliche Konkurrenz zu bereits bestehenden Systemen zu kommen und andererseits deren Verbreitung und Vorteile zu nutzen, ist daher möglichst eine Kompatibilität zu mindesetens einem bereits vorhandenen System anzustreben.

Aufgabe der Erfindung ist es, ein paketförmige Übertragungsverfahren von Daten anzugeben, das eine hohe Datenübertragungsrate ermöglicht, wobei die Kompatibilität zu bereits vorhandenen Übertragungsverfahren möglichst beibehalten werden soll.

Die Aufgabe wird nach der Erfindung durch die Merkmale des Anspruchs 1 gelöst. Der wesentliche Grundgedanke besteht dabei darin, daß die Übertragung der in der Regel mittels Symbolen zusammengefaßten Daten des Datenformats mit unterschiedlichen Datenraten erfolgt, wobei insbesondere der lange Datenteil gegenüber den vorausgehenden Daten des Pakets mit einer deutlich erhöhten Datenrate übertragen wird. Hierzu wird über eine Steuerinformation im Steuerteil des gesendeten Datenformats der Empfänger auf den Empfang einer hohen Datenrate umgeschaltet, wobei die Bandbreite, Übertragungsart und gegebenenfalls der Verarbeitungstakt für den nachfolgenden Datenteil an die entsprechende Bandbreite, Datenrate und Übertragungsart des Senders angepaßt wird. Wenn diese Steuerinformation im Empfänger nicht erkannt wird oder sie beispielsweise gar nicht gesendet worden ist, dann erfolgt selbstverständlich im Empfänger auch keine Umschaltung.

Die gewünschte Kompatibilität zu bisherigen, nichtumschaltfähigen Empfängern oder Sendern wird durch eine Rückmeldung vom Empfänger an den Sender erreicht, der dabei signalisiert, daß er die Steuerinformation erkannt hat und die Umschaltung zum richtigen Zeitpunkt ausführen wird. Das entspricht etwa einer Erweiterung des in der Regel bereits vorhandenen "Handshake-Protokolls", mit dem Fehlermeldungen und sonstige Informationen zwischen dem Sender und Empfänger in beiden Richtungen ausgetauscht werden, damit gestörte Datenpakete nochmals wiederholt werden. Wenn diese Rückmeldung vom Empfänger unterbleibt, dann weiß der Sender, daß er keine Umschaltung für das Datenpaket vornehmen darf und es vollständig mit der niederen Geschwindigkeit zu übertragen ist.

Ohne die Funktion der Rückmeldung der Steuerinformation ist das Übertragungsverfahren völlig eigenständig und eine Datenweitergabe ist nur an entsprechend angepaßte Empfänger möglich. Unbeschadet davon kann natürlich das Datenformat weitgehend identisch zu bereits vorhandenen Datenformaten sein. Da das Übertragungsverfahren nur innerhalb der zugehörigen Sender und Empfänger funktioniert, kann die spezielle Steuerinformation sogar ganz entfallen, weil Sender und Empfänger automatisch vor der Übertragung des Datenteils auf die höhere Datenrate umschalten.

Die höhere Datenrate erfordert sender- wie empfängerseitig entweder eine höhere Kanalbandbreite, weil jedes Symbol zeitlich komprimiert und damit die Symbolperiode verkleinert wird, wodurch die erforderliche Bandbreite entsprechend erhöht werden muß. Oder die erhöhter Datenrate wird durch eine Erhöhung der mehrwertigen Symbolcodierung erreicht, das heißt, daß die Anzahl der Bits pro Symbol erhöht wird. Schließlich führt auch eine Kombination aus beiden Maßnahmen zu einer erhöhten Datenrate. Dies ist ein besonders vorteilhafter Weg, weil hierbei die vorhandenen Reserven bei Bandbreite und Signalgüte besser aufgeteilt werden können. Die Änderung der Symbolcodierung entspricht dabei einer Änderung der Modulationsart. Anstatt beispielsweise nur vier unterscheidbare Phasenlagen mittels einer einfachen Vierquadranten-Phasenmodulation QPSK (=Quadratur Phase Shift Keying) zu übertragen, wird pro Symbol die Anzahl der diskreten Phasen erhöht und damit entsprechend die Anzahl der unterscheidbaren logischen Zustände. Die Symbolrate ändert sich dabei nicht. Die reinen Phasenmodulationsarten werden unter der Bezeichung PSK (=Phase Shift Keying) zusammengefaßt. Noch mehr Symbole können unterschieden werden, wenn diskrete Phasen mit diskreten Amplituden kombiniert werden. Sehr verbreitet sind hierbei die Vierquadrantenverfahren mit unterschiedlichen Amplituden. Unter der Bezeichnung Quadratur-Ampliduten-Modulation, abgekürzt QAM werden diese Verfahren zusammengefaßt. Hierdurch können 16, 64 oder gar 256 logische Zustände unterschieden werden. Entsprechend werden die zugehörigen QAM-Modulationsarten in Kurzform mit 16QAM, 64QAM und 256QAM bezeichnet.

Ein anderes bekanntes Verfahren verwendet zur Übertragung logischer Zustände ein Frequenzmodulationsverfahren, das beispielsweise auch bei Bluetooth und DECT verwendet wird. Damit die erforderliche Bandbreite nicht zu groß wird, ist keine harte Frequenzumtastung vorgesehen, sondern eine weiche Frequenzmodulation, die dem Funktionsverlauf einer Gauss-Kurve folgt und dem Verfahren auch den Namen gab "Gaussian Minimum Shift Keying" oder kurz GMSK.

Ein Erhöhung der mehrwertigen Symbolcodierung ist natürlich nur dort möglich, wo die Störungen klein sind. Da die Übertragung Daten jedoch nur im Nahbereich, etwa im Gesprächsabstand von zwei Personen und in relativ kurzer Zeit erfolgen soll, ist der mögliche Störeinfluß gering. Im Extremfall wird der Ort der Datenübergabe gewechselt.

Die Umschaltung der Bandbreite auf dem Empfängerseite ist bei digitalen Filtern leicht durch eine Änderung der Verarbeitungstaktes und/oder durch eine Änderung der Filterkoeffizienten möglich. Bei analogen Filtern ist dies ungünstiger. Die Verarbeitung von mehrwertigen Symbolcodierungen erfordert in der Regel wegen der hohen Stabilität und Unempfindlichkeit gegenüber Toleranzen und äußere Einflüssen eine digitale Verarbeitung. Die Bandbreite und die minimal zulässige Taktrate dürfen das Nyquist-Kriterium selbstverständlich nicht verletzen. Mit den derzeit möglichen Taktraten bis 40 MHz und mehr, auch für Konsumanwendungen, sind hier keine einschränkenden Bedingungen erkennbar.

Die Erfindung und vorteilhafte Weiterbildungen werden nun anhand der Figuren der Zeichnung näher erläutert:

Fig. 1 zeigt schematisch als Beispiel die Struktur eines Paketformats,
Fig. 2 zeigt den Zusammenhang zwischen Kanalbandbreite und Modulationsart,
Fig. 3 zeigt schematisch das Frequenzschema eines idealen Übertragungskanals und
Fig. 4 zeigt schematisch das Frequenzschema eines realen Übertragungskanals.

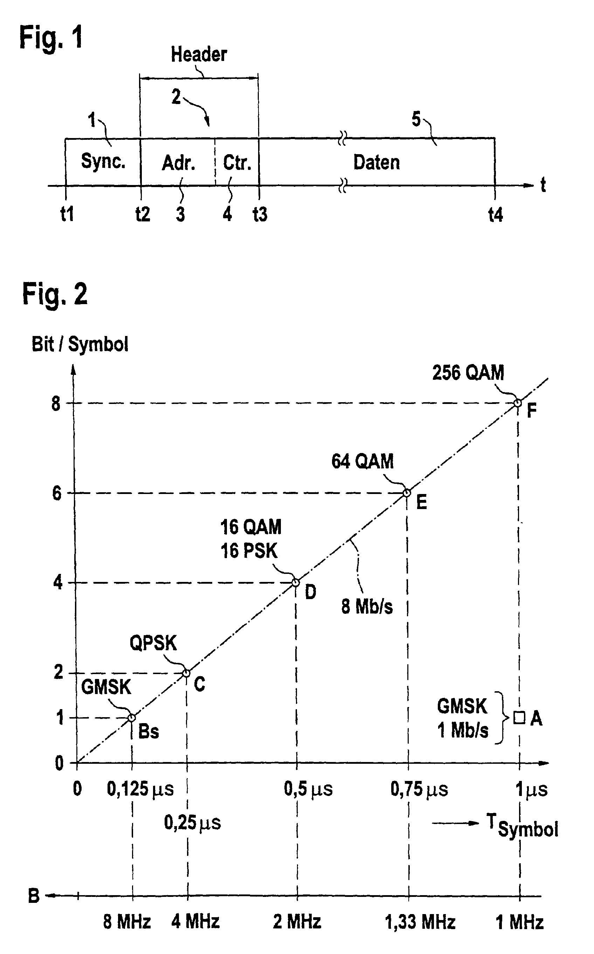

Fig. 1 zeigt schematisch die Struktur eines Paketformats, das zum Zeitpunkt t1 mit einem Sychronisationsteil 1 beginnt und zum Zeitpunkt t4 endet. Das Paketformat schließt sich dabei vorteilhafterweise aus Kompatibilitätsgründen an vorhandene Datenformate und Übertragungsverfahren an, die standardisiert sind und daher auch relativ verbreitet sind. Der Synchronisationsteil dient der Synchronisation von Sender und Empfänger, die per Funkt über die Übertragungsstrecke miteinander in Verbindung stehen. Zum Zeitpunkt t2 folgt ein Header 2, der einen Adressenteil 3 und einen Steuerteil 4 enthält. Die Adressen betreffen den Empfänger und gegebenenfalls auch den Sender. Der Steuerteil enthält die für die Paketübertragung üblichen Kontroll- und Steuerdaten und sonstige Informationen. Zum Zeitpunkt t3 beginnt im Datenformat ein relativ langer Datenteil 5, der die eigentlich zu übertragenden Daten enthält und zum Zeitpunkt t4 endet. Entsprechend der Erfindung überträgt der Sender vom Datenformat die Bereiche 1 und 2 mit einer relativ langsamen Datenrate, die gegebenenfalls einem zugeordneten Übertragungsstandard entspricht. Der eigentliche Datenbereich 5 wird dann vom Sender mit einer deutlich erhöhten Datenrate übertragen.

Wenn das Übertragungsverfahren zu anderen Übertragungsverfahren kompatibel sein soll, dann enthält der Steuerteil 4 ein Steuersignal, das im Empfänger eine Umschaltung der Empfangseigenschaften bewirkt, so daß der folgende Datenteil 5 mit einer höheren Datenrate empfangen werden kann. Die Einfügung dieses Steuersignals erfordert in der Regel auch bei standardisierten Paketformaten keine Änderung des Formats, denn üblicherweise sind im Steuerteil 4 neben den belegten Instruktionsfeldern auch einige freie Instruktionsfelder vorhanden, die für das zusätzliche Steuersignal zur Verfügung stehen. Über ein "Handshake"-Verfahren können Sender und Empfänger die Empfangs- und Sendebereitschaft für eine optionale Erhöhung der Datenrate miteinander abstimmen. Ohne diese erfolgreiche Rückmeldung arbeitet das System in dem zugeordneten Übertragungsstandard.

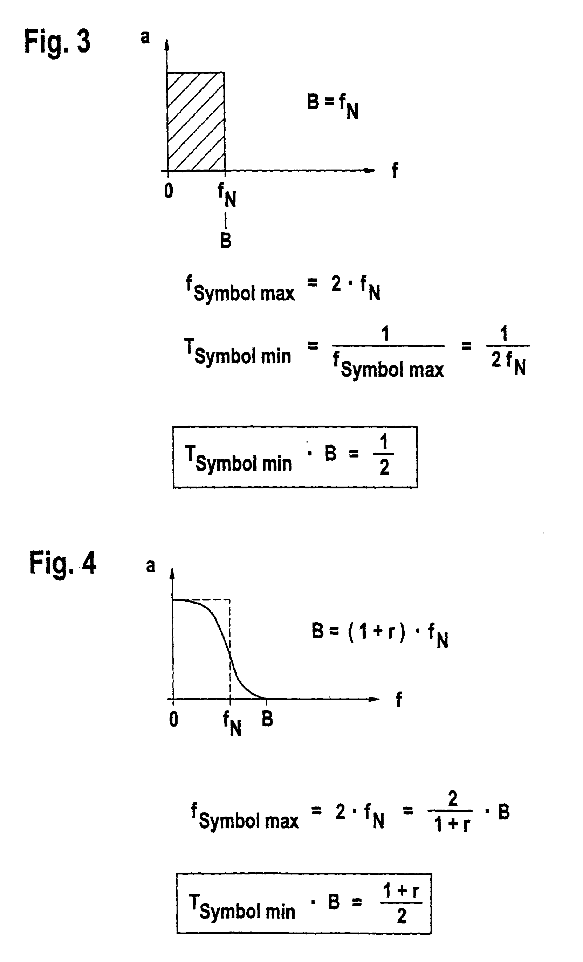

Fig. 2 zeigt an einem Diagramm wie über eine Änderung der Kanalbandbreite B und der Modulationsart die Datenrate bei der Übertragung gegenüber einer angenommenen Standardübertragung erhöht wird. Das Diagramm zeigt in horizontaler Richtung die Symbolperiode $T_{Symbol}$ sowie zugehörige Bandbreite B und in vertikaler Richtung die Bit-Anzahl pro Symbol. Die Symbolperiode und Bandbreite sind miteinander verkoppelt, vergl. die Fig. 3 und Fig. 4, um die zur Verfügung stehenden Frequenzbereiche möglichst gut auszunutzen. In der Regel ist für derartige Übertragungsverfahren die Bandbreite B nur so groß, daß gerade noch die jeweilige Symbolperiode $T_{symb}$ übertragen werden kann. Bei einer Verkleinerung der Symbolperiode wäre die Bandbreite nicht mehr ausreichend.

Der angenommene Übertragungsstandard A entspricht dem Bluetooth-Standard, dessen Kanalbandbreite 1 MHz und Symbole mit einer Symbolperiode von 1 Mikrosekunde aufweist. Mit GMSK wird dabei eine Datenrate von 1 Mb/s übertragen. Wenn die Symbolperiode um den Faktor 1/8 auf 0,125 Mikrosekunden verkürzt wird, kann die achtfache Datenmenge übertragen werden, nämlich 8 Mb/s. Dies erfordert allerdings, daß die zur Verfügung stehende Bandbreite B um den Faktor 8 auf 8 MHz vergrößert werden muß. Die zugehörige Lage im Diagramm von Fig. 2 zeigt die Position B.

Soll die Symbolperiode von 1 Mikrosekunde und damit die Bandbreite B von 1 MHz gegenüber dem Übertragungsstandard A beibehalten werden, dann kann die Erhöhung der Datenrate nur über eine Erhöhung der mehrwertigen Symbolcodierung um den Faktor 8 erreicht werden. Anstatt 1 Bit/Symbol wie beim Übertragungsstandard A enthält jedes Symbol nun die Informationen von 8 Bit, wodurch 256 Zustände pro Symbol unterscheidbar sind. Dies entspricht im Diagramm von Fig. 2 der Position F mit dem zugehörigen 256QAM-Modulationsverfahren.

Zwischen den Übertragungsmöglichkeiten nach den Positionen B und F gibt es noch die Übertragungsmöglichkeiten nach den Positionen C, D und E. Dabei stellt die Position C die Übertragung mit einer QPSK-Modulation dar, die Position D die Übertragung mit 16QAM oder 16PSK und schließlich die Position die Übertragung mit 64QAM. Die zughörige Anzahl von Bit/ Symbol, Kanalbreite B und Symbolperiode $T_{Symbol}$ ist aus dem Diagramm von Fig. 2 leicht zu entnehmen. Den Positionen C, D und E sind 2 bzw. 4 bzw. 6 Bit/Symbol, die Kanalbreiten 4 bzw. 2 bzw. 1,33 MHz und die Symbolperioden 0,25 bzw. 0,5 bzw. 0,75 Mikrosekunden zugeordnet.

Fig. 3 zeigt im Frequenzdiagramm den idealisierten Zusammenhang zwischen einer vorgegebenen Kanalbandbreite B und der minimalen Symbolperiode $T_{Symbol\ min}$, die gerade noch über diesen Kanal übertragen werden kann. Entsprechend dem Nyqusit-Kriterium darf die Signalfrequenz, die hier der maximalen Symbolfrequenz $f_{Symbol\ max}$ entspricht, höchstens halb so groß wie die Nyquist-Frequenz $f_n$ sein, die hier im idealisierten Fall mit der Bandbreite B des Signals identisch ist. Das idealisierte Signal ist hat einen scharf begrenzten Frequenzbereich, der in Fig. 3 schraffiert dargestellt ist. Aus den einfachen Herleitungen ergibt sich, daß in dem idealisierten Fall folgende Beziehungsgleichung gilt:

$$T_{Symbol\ min} = 1 / f_{Symbol\ max} = 1/2\ f_N$$

$$T_{Symbol\ min} \times B = 1/2$$

Im realen Fall lassen sich derartige scharfe Frequenzgrenzen $f_N$ allenfalls angenähert realisieren, wobe der Aufwand mit zunehmender Annährerung immer größer wird. Gesucht ist daher ein Kompromis zwischen Annäherung und Aufwand. Bei gegebener Symbolperiode wird also ein Frequenzverlauf für den Übertragungskanal angestrebt, der bei möglichst wenig zusätzlicher Bandbreite die Übertragung ermöglicht. Die reale Bandbreite B und die zugehörige Nyquistfrequenz $f_N$ unterscheiden sich somit. Diesen realen Fall zeigt Fig. 4. Der ideale Frequenzbereich bis $f_N$ ist im Frequenzdiagramm mit gestrichelter Linie und der reale Frequenzbeich bis zur realen Bandgrenze B durchgezogen dargestellt. Der Unterschied zwischen der idealen und der realen Frequenzgrenze wird mittels eines "roll-off"-Faktors "r" wie folgt angegeben:

$$B = ( 1 + r )\, F_N$$

Bei guten Übertragungskanälen liegt der roll-off-Faktor r zwischen 20% und 60%. Bei einfacheren Übertragungskanälen kann er über den Wert 1 ohne weiteres hinausgehen. Mit dem roll-off-Faktor r ändert sich die in Fig. 3 angegebene Beziehungsgleichung zwischen der Symbolperiode und der Bandbreite wie in Fig. 4 angegeben:

$$T_{Symbol\ min} \times B = (1 + r) / 2$$

Es wird hierbei erwähnt, daß dem Diagrammbeispiel von Fig. 2 vereinfachend ein roll-off-Faktor von r=1 zugrunde liegt, so daß dort die einfachte Beziehung $T_{Symbol} \times B = 1$ gilt.

**Patentansprüche**

1. Datenübertragungsverfahren für ein paketförmiges Datenformat mit einem Steuerteil (4) und einem Datenteil (5), **dadurch gekennzeichnet, daß** die Übertragung des paktetförmigen Datenformats bezüglich des Steuerteils und Datenteils mit unterschiedlichen Datenraten erfolgt, wobei die Datenrate des Datenteils gegenüber der Datenrate des Steuerteils erhöht ist.

2. Datenübertragungsverfahren nach Anspruch 1, **dadurch gekennzeichnet, daß** in dem vor dem Datenteil (5) liegenden Steuerteil (4) ein Steuersignal vorhanden ist, das den Empfänger für die zu empfangenden Daten des Datenteils auf eine erhöhte Empfangsdatenrate umschaltet, wobei die erhöhte Empfangsdatenrate mindestens so groß wie die Datenrate des Senders bei der Übertragung des Datenteils ist.

3. Datenübertragungsverfahren nach einem der Ansprüche 1 oder 2, **dadurch gekennzeichnet, daß** die Erhöhung der Datenrate sender- und empfängerseitig über eine Erhöhung der Kanalbandbreite (B) und eine zeitliche Komprimierung der übertragenen Daten oder Symbole erfolgt.

4. Datenübertragungsverfahren nach einem der Ansprüche 1 oder 2, **dadurch gekennzeichnet, daß** die Erhöhung der Datenrate sender- und empfängerseitig über eine Erhöhung der mehrwertigen Symbolcodierung (GMSK; QPSK; QAM) der übertragenen Daten erfolgt, wobei die Kanalbandbreite (B) und/oder die Symbolperiode ($T_{Symbol}$) beibehalten werden.

5. Datenübertragungsverfahren nach einem der Ansprüche 1 oder 2, **dadurch gekennzeichnet, daß** die Erhöhung der Datenrate sender- und empfängerseitig sowohl über eine Erhöhung der Kanalbandbreite (B) mit einer zeitlichen Komprimierung der übertragenen Daten oder Symbole als auch über eine Erhöhung der Symbolcodierung (GMSK; QPSK; QAM) der übertragenen Daten erfolgt.

## Fig. 1

## Fig. 2

**Fig. 3**

$$B = f_N$$

$$f_{Symbol\ max} = 2 \cdot f_N$$

$$T_{Symbol\ min} = \frac{1}{f_{Symbol\ max}} = \frac{1}{2\,f_N}$$

$$T_{Symbol\ min} \cdot B = \frac{1}{2}$$

**Fig. 4**

$$B = (1 + r) \cdot f_N$$

$$f_{Symbol\ max} = 2 \cdot f_N = \frac{2}{1 + r} \cdot B$$

$$T_{Symbol\ min} \cdot B = \frac{1 + r}{2}$$

**Europäisches Patentamt**

# EUROPÄISCHER RECHERCHENBERICHT

Nummer der Anmeldung

EP 00 11 6465

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 98 10568 A (AIRONET WIRELESS COMMUNICATION) 12. März 1998 (1998-03-12) <br> * Seite 8, Zeile 32 - Seite 9, Zeile 8 * <br> * Seite 12, Zeile 12 - Zeile 16 * <br> * Seite 14, Zeile 30 - Seite 15, Zeile 7 * <br> * Seite 17, Zeile 7 - Seite 18, Zeile 6 * | 1,2,4 | H04L29/06 |
| Y | | 5 | |
| | --- | | |
| X | CARL ANDREN ET AL: "CCK Modulation delivers 11 Mbps for high Rate IEEE 802.11 Extension" <br> WHITE PAPER, [Online] <br> 14. März 2000 (2000-03-14), XP002147321 <br> * Seite 3, Zeile 1 - Zeile 16 * <br> * Abbildung 4 * | 1,2,4 | |
| | --- | | |
| X | US 5 561 771 A (HARRIMAN JR EDWARD S ET AL) 1. Oktober 1996 (1996-10-01) <br> * Zusammenfassung * <br> * Spalte 1, Zeile 64 - Spalte 2, Zeile 15 * <br> * Spalte 2, Zeile 42 - Zeile 46 * <br> * Spalte 3, Zeile 40 - Zeile 44 * <br> * Spalte 7, Zeile 51 - Zeile 60 * <br> * Spalte 5, Zeile 20 - Zeile 31 * <br> * Abbildung 6 * | 1,3 | **RECHERCHIERTE SACHGEBIETE (Int.Cl.7)** <br> H04L |
| Y | ----- | 5 | |

Der vorliegende Recherchenbericht wurde für alle Patentansprüche erstellt

| Recherchenort | Abschlußdatum der Recherche | Prüfer |
|---|---|---|
| BERLIN | 29. Januar 2001 | Tous Fajardo, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 00 11 6465

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-01-2001

| Im Recherchenbericht angeführtes Patentdokument | Datum der Veröffentlichung | Mitglied(er) der Patentfamilie | | Datum der Veröffentlichung |
|---|---|---|---|---|
| WO 9810568 A | 12-03-1998 | AU | 6972096 A | 26-03-1998 |
| | | EP | 0925673 A | 30-06-1999 |
| US 5561771 A | 01-10-1996 | US | 5442750 A | 15-08-1995 |
| | | AU | 2656892 A | 03-05-1993 |
| | | EP | 0606299 A | 20-07-1994 |
| | | JP | 6511338 T | 15-12-1994 |
| | | WO | 9307569 A | 15-04-1993 |

EPO FORM P0461

Für nähere Einzelheiten zu diesem Anhang : siehe Amtsblatt des Europäischen Patentamts, Nr.12/82